# EUROPEAN PATENT SPECIFICATION

(11) **EP 2 558 533 B1**
(45) Date of publication and mention of the grant of the patent: **14.03.2018**
(21) Application number: 11769062.8
(22) Date of filing: 12.04.2011
(51) Int. Cl.: C08L 33/12, C08K 5/5415, C08K 13/02

(54) **IMPACT-RESISTANT METHYL METHACRYLATE RESIN COMPOSITION HAVING IMPROVED SCRATCH RESISTANCE**
SCHLAGFESTE METHYL-METHACRYLAT-HARZZUSAMMENSETZUNG MIT VERBESSERTER KRATZFESTIGKEIT
COMPOSITION DE RÉSINE DE MÉTHACRYLATE DE MÉTHYLE RÉSISTANT AUX CHOCS PRÉSENTANT UNE RÉSISTANCE AMÉLIORÉE AUX RAYURES

(30) Priority: 12.04.2010 KR 20100033093
(43) Date of publication of application: 20.02.2013
(73) Proprietor: Lg Mma Corp., Daejeon 305-380 (KR)
(72) Inventor: CHANG, Kyoung Ah, Daejeon 305-729 (KR); LEE, Ho Sang, Daejeon 305-762 (KR); KIM, Se Yong, Daegu 704-744 (KR); JUNG, Hyo-Sun, Yeosu-si, Jeollanam-do 555-750 (KR)
(74) Representative: Bassil, Nicholas Charles
(86) International application number: PCT/KR2011/002587
(87) International publication number: WO 2011/129596

(56) References cited:
- WO-A1-2012/034821
- DE-A1- 4 300 596
- JP-A- H08 165 340
- KR-B1- 100 725 940
- KR-B1- 100 894 671
- US-A- 5 821 321
- US-B2- 6 894 113

## Description

### Technical Field

The present invention relates to an impact-resistant methyl methacrylate resin composition having improved scratch resistance, more particularly, to an impact-resistant methyl methacrylate resin composition having improved flowability and impact resistance, particularly scratch resistance of methyl methacrylate resin by mixing a siloxane compound therein.

### Background Art

Generally, methyl methacrylate-based resin has high transmittance, good surface gloss, and outstanding scratch resistance due to excellent rigidity. The methyl methacrylate-based resin is used in injection products such as rear mirrors of vehicles, dashboard covers, windows of mobile phones, or the like, and applied in various fields of all industries such as being used for various kinds of boards through extruding.

However, the methyl methacrylate-based resin has weak impact strength, compared with other plastic materials, and thus is hard to be applicable for uses in which impact resistance is required. Therefore, a methyl methacrylate resin, of which impact resistance is improved by introducing an appropriate impact modifier in order to improve impact resistance, needs to be used.

However, an impact-resistant methyl methacrylate-based resin has disadvantages in that surface hardness and scratch resistance are deteriorated due to the impact modifier. Therefore, when it is used for the exteriors of vehicles, housings of electronic instruments, or the like, scratch defects are generated by external contaminants, scratching, handling of users, resulting in serious quality problems. Furthermore, the defect rate of the products is increased due to scratches by workers during a producing process of the products, resulting in an increase in the production costs. For this reason, a protective film is used in the impact-resistance methylate-based resin in order to prevent scratches, but this causes to increase the manufacturing costs and have an adverse influence on product prices.

### Disclosure of Invention

### Technical Problem

An object of the present invention is to provide an impact-resistant methyl methacrylate resin composition having excellent scratch resistance and improved impact strength and flowability by introducing a siloxane compound in an impact-resistant methyl methacrylate-based resin.

### Solution to Problem

In one general aspect, an impact-resistant methyl methacrylate resin composition in which a siloxane compound having a structure of Formula 1 below is introduced.

The impact-resistant methyl methacrylate resin composition includes a PMMA-based resin containing 10 to 50weight% of an impact modifier and 0.5 to 5 parts by weight of a siloxane compound having a structure of Formula 1 below based on 100 parts by weight of the PMMA-based resin.

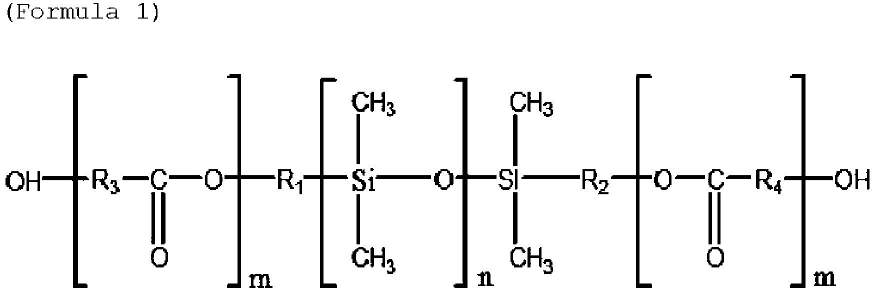

(in Formula 1, R₁,R₂,R₃ and R₄ are independently alkylene having 1 to 5 carbon atoms; and m and n are independently an integer of 1 or more.)

In the siloxane compound having the structure of Formula 1, in order to improved scratch resistance of the impact-resistant methyl methacrylate resin composition, R₁ and R₂ may be independently -(CH₂)₃-; R₃ and R₄ may be independently -(CH₂)₅-; and m and n may be independently an integer of 1 or more, satisfying m:n=18:30.

The impact-resistant methyl methacrylate resin composition may contain 0.5 to 5 parts by weight of the siloxane compound based on 100 parts by weight of the PMMA-based resin. When the content of the siloxane compound is less than 0.5 parts by weight, the scratch resistance, impact strength, and flowability are less improved. When the content of the siloxane compound is more than 5 parts by weight, the light transmittance and gloss degree are deteriorated and the manufacturing costs are increased. Therefore, the impact-resistant methyl methacrylate resin composition containing the above content range of the siloxane compound can improve scratch resistance while maintaining excellent flowability, light transmittance, gloss degree, and impact resistance.

The impact modifier may have a powder shape with an average particle diameter of 0.2 to 0.25*µ*m, and may be polymerized by at least one comonomer selected from butadiene, methyl methacrylate, methyl acrylate, ethyl(meth)acrylate, butyl (meth)acrylate, and styrene, and at least one cross-linking agent selected from divinyl benzene, ethyleneglycol dimethacrylate, and diethyleneglycol dimethacrylate.

The impact modifier may have a multi-layer structure having two or more layers, which consists of alkyl acrylate selected from the group consisting of methyl acrylate, ethyl acrylate, and n-butyl acrylate; a styrene-based aromatic compound selected from the group consisting of styrene, alpha methyl styrene, divinyl benzene, and vinyl toluene; a siloxane compound selected from the group consisting of dimethyl siloxane, methylphenyl siloxane, diphenyl siloxane, and a mixture thereof; or at least one cross-linking agent selected from divinyl benzene, 3-butandiol diacrylate, 1,3-butanediol dimethacrylate, 1,4-butanediol diacrylalte, tetraethyleneglycol diacrylate, and tetraethyleneglycol dimethacrylate.

The PMMA-based resin may be a homopolymer of methyl methacrylate monomers or a copolymer of a methyl methacrylate monomer and an acrylate monomer. The copolymer of the methyl methacrylate monomer and the acrylate monomer may contain 80 to 90 weight% of the methyl methacrylate monomer and 10 to 20 weight% of the acrylate monomer. When the content of the copolymer is out of the above range, the impact-resistant methyl methacrylate resin composition of the present invention is difficult to apply to the exteriors of vehicle, housings of electronic instruments, or the like due to the deterioration in mechanical physical properties.

The acrylate monomer may include at least one methacylate-based monomer selected from ethyl methacrylate, n-butyl methacrylate, I-butyl methacrylate, t-butyl methacrylate lauryl methacrylate, and 2-ethylhexyl methacrylate, or oner or more selected from methyl acrylate, ethyl acrylate, n-butyl acrylate, t-butyl acrylate, and 2-ethylhexyl acrylate.

The PMMA-based resin containing the impact modifier may be obtained by an extrusion process in which melting is performed at a temperature of 220∼240°C. The PMMA-based resin containing the extrusion-processed impact modifier may be mixed with the siloxane compound of Formula 1, and then a pallet type methyl methacrylate-based resin composition may be obtained by using an extruder, this may be applied to extrusion molding, injection molding, or blow molding.

In the present invention, the PMMA-based resin composition may further include at least one selected from the group consisting of an active agent, a stabilizer, a heat-resistant agent, an antioxidant, a UV stabilizer, a fluorescent whitening agent, a flame retardant, a colorant, a dye, an inorganic additive, and a pigment.

The impact-resistant methyl methacrylate resin composition of the present invention may be extrusion or injection molded to manufacture a housing.

### Advantageous Effects of Invention

A resin composition according to the present invention has improved scratch resistance while maintaining excellent flowability, light transmittance, gloss degree, and impact resistance of an impact-resistant methylmethacrylate resin, and thus, may be used for the exteriors of vehicles, and housing components for all industries such as displays, electrical and electronic products, or the like. Therefore, a simple process and reduced production costs can be achieved, compared with in a case of using the protective film of the related art.

### Best Mode for Carrying out the Invention

Hereinafter, examples of the present invention will be described in detail.

However, the examples below are illustrated by way of example only and do not intend to limit the contents of the present invention.

In examples and a comparative example below, physical property evaluation are as follows.
(1) Izod impact strength: ASTM D256
(2) Flowability: ASTM D1238, 3.8kg, 230°C
(3) Scratch resistance: ASTM D7027, a specimen was injection molded, followed by scratching at a rate of 100mm/s under application of 30N of weight, and then scratch hardness (Hs) was measured and a surface was observed.

### Example 1

15 weight% of a powder type impact modifier with an average particle diameter of 0.25*µ*m (M210, Kaneka Inc.) and 85 weight% of a methyl methacrylate copolymer were melted at a temperature of 230°C, and PMMA-based resin containing an impact modifier was extruded. Based on 100 parts by weight of the extruded PMMA-based resin, 1 part by weight of a siloxane compound (TEGOMER H-Si 6440) by Formula 2 below was mixed, followed by using an extruder, thereby obtaining a pallet type methyl methacrylate-based resin composition. The resin composition was used to mold a specimen by using an injection molder, and physical properties thereof were measured. The results were tabulated in Table 1.

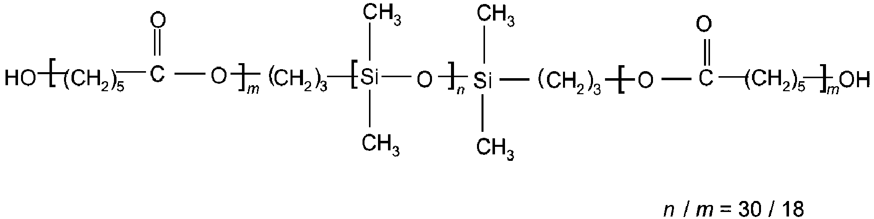

### Example 2

The same method as Example 1 was performed except for mixing 1.5 parts by weight of a silicon-based compound based on 100 parts by weight of the extruded PMMA-based resin, and the results were tabulated in Table 1.

### Example 3

The same method as Example 1 was performed except for mixing 2 parts by weight of a silicon-based compound based on 100 parts by weight of the extruded PMMA-based resin, and the results were tabulated in Table 1.

### Example 4

The same method as Example 1 was performed except for mixing 3 parts by weight of a silicon-based compound based on 100 parts by weight of the extruded PMMA-based resin, and the results were tabulated in Table 1.

### Comparative example 1

The same method as Example 1 was performed except for using 100 parts by weight of the extruded PMMA-based resin, and the results were tabulated in Table 1.

**[Table 1] Measured results on physical properties of impact-resistance methyl methacrylate resin**

| COMPOSITION | EXAMPLE 1 | EXAMPLE 2 | EXAMPLE 3 | EXAMPLE 4 | COMPARATIVE EXAMPLE I |
|---|---|---|---|---|---|
| IMPACT-RESISTANT PMMA RESIN (PARIS BY WEIGHT) | 100 | 100 | 100 | 100 | 100 |
| SILOXANE COMPOUND (PARTS BY WEIGHT) | 1 | 1.5 | 2 | 3 | 0 |

| EVALUATION ON PHYSICAL PROPERTIES | | | | | |
|---|---|---|---|---|---|
| IZOD IMPACT STRENGTH (kg·cm/cm) | 3.3 | 3.3 | 3.2 | 3.2 | 2.7 |
| FLOWABILITY (g/10min) | 2.3 | 2.4 | 2.6 | 2.8 | 2.1 |
| SCRATCH HARDNESS (Mpa) | 230 | 250 | 255 | 300 | 225 |
| SCRATCH GENERATION DISTANCE (µm) | 498 | 483 | 474 | 437 | 505 |

As shown in Table 1, it could be found that the impact-resistant methyl methacrylate-based resin composition of each of Examples 1 to 4 according to the present invention had improved Izod impact strength and flow index as well as very high scratch hardness and a reduced scratch generation distance, compared with the comparative example. As a result, it was found that mixing the siloxane compound according to the present invention can improve scratch resistance.

## Claims

1. An impact-resistant methyl methacrylate resin composition having excellent scratch resistance, comprising a PMMA-based resin containing 10 to 50weight% of an impact modifier and 0.5 to 5 parts by weight of a siloxane compound having a structure of Formula 1 below based on 100 parts by weight of the PMMA-based resin 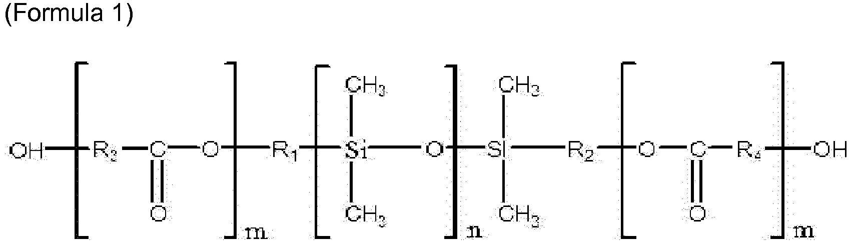 (in Formula 1, R₁, R₂, R₃ and R₄ are independently alkylene having 1 to 5 carbon atoms; and m and n are independently an integer of 1 or more.)

2. The impact-resistant methyl methacrylate resin composition having excellent scratch resistance of claim 1, wherein in Formula 1, R₁ and R₂ are independently -(CH₂)₃-; R₃ and R₄ are independently -(CH₂)₅-; and m and n are independently an integer of 1 or more, satisfying m:n=18:30.

3. The impact-resistant methyl methacrylate resin composition having excellent scratch resistance of claim 1, wherein the impact modifier is polymerized by at least one comonomer selected from butadiene, methyl methacrylate, methyl acrylate, ethyl(meth)acrylate, butyl(meth)acrylate, and styrene, and at least one cross-linking agent selected from divinyl benzene, ethyleneglycol dimethacrylate, and diethyleneglycol dimethacrylate.

4. The impact-resistant methyl methacrylate resin composition having excellent scratch resistance of claim 1, wherein the PMMA-based resin is a homopolymer of methyl methacrylate monomers or a copolymer of a methyl methacrylate monomer and an acrylate monomer.

5. The impact-resistant methyl methacrylate resin composition having excellent scratch resistance of claim 4, wherein the copolymer of the methyl methacrylate monomer and the acrylate monomer contains 80 to 90 weight% of the methyl methacrylate monomer and 10 to 20 weight% of the acrylate monomer.

6. The impact-resistant methyl methacrylate resin composition having excellent scratch resistance of claim 5, wherein the acrylate monomer is at least one methacylate-based monomer selected from ethyl methacrylate, n-butyl methacrylate, l-butyl methacrylate, t-butyl methacrylate, lauryl methacrylate, and 2-ethylhexyl methacrylate, or at least one selected from methyl acrylate, ethyl acrylate, n-butyl acrylate, t-butyl acrylate, and 2-ethylhexyl acrylate.

7. The impact-resistant methyl methacrylate resin composition having excellent scratch resistance of claim 5, wherein the PMMA-based resin composition further includes at least one selected from the group consisting of an active agent, a stabilizer, a heat-resistant agent, an antioxidant, a UV stabilizer, a fluorescent whitening agent, a flame retardant, a dye, an inorganic additive, and a pigment.

8. A housing manufactured by extrusion or injection molding using the impact-resistant methyl methacrylate resin composition having excellent scratch resistance selected from any one of claims 1 to 7.

## Patentansprüche

1. Schlagzähe Methylmethacrylatharzzusammensetzung mit hervorragender Kratzfestigkeit, umfassend ein auf PMMA basierendes Harz mit 10 bis 50 Gew.-% eines Schlagzähigkeitsmodifikators und 0,5 bis 5 Gewichtsteilen einer Siloxanverbindung mit der Struktur der nachstehenden Formel 1, bezogen auf 100 Gewichtsteile des auf PMMA basierenden Harzes. 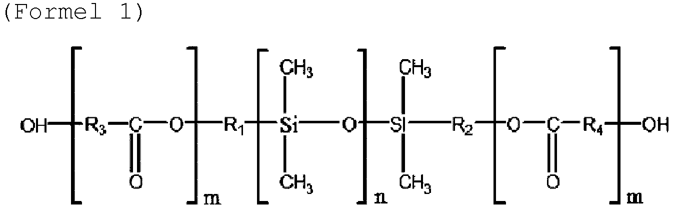 (in Formel 1 stehen R₁, R₂, R₃ und R₄ unabhängig für Alkylen mit 1 bis 5 Kohlenstoffatomen und m und n unabhängig für eine ganze Zahl von 1 oder mehr.)

2. Schlagzähe Methylmethacrylatharzzusammensetzung mit hervorragender Kratzfestigkeit nach Anspruch 1, wobei in Formel 1 R₁ und R₂ unabhängig für -(CH₂)₃- stehen; R₃ und R₄ unabhängig für -(CH₂)₅-stehen und m und n unabhängig für eine ganze Zahl von 1 oder mehr stehen, wobei m:n = 18:30 erfüllt ist.

3. Schlagzähe Methylmethacrylatharzzusammensetzung mit hervorragender Kratzfestigkeit nach Anspruch 1, wobei der Schlagzähigkeitsmodifikator durch mindestens ein Comonomer, das aus Butadien, Methylmethacrylat, Methylacrylat, Ethyl(meth)-acrylat, Butyl(meth)acrylat und Styrol ausgewählt ist, und mindestens ein Vernetzungsmittel, das aus Divinylbenzol, Ethylenglykoldimethacrylat und Diethylenglykoldimethacrylat ausgewählt ist, polymerisiert ist.

4. Schlagzähe Methylmethacrylatharzzusammensetzung mit hervorragender Kratzfestigkeit nach Anspruch 1, wobei es sich bei dem auf PMMA basierenden Harz um ein Homopolymer von Methylmethacrylat-Monomeren oder ein Copolymer von einem Methylmethacrylat-Monomer und einem Acrylat-Monomer handelt.

5. Schlagzähe Methylmethacrylatharzzusammensetzung mit hervorragender Kratzfestigkeit nach Anspruch 4, wobei das Copolymer des Methylmethacrylat-Monomers und des Acrylat-Monomers 80 bis 90 Gew.-% des Methylmethacrylat-Monomers und 10 bis 20 Gew.-% des Acrylat-Monomers enthält.

6. Schlagzähe Methylmethacrylatharzzusammensetzung mit hervorragender Kratzfestigkeit nach Anspruch 5, wobei es sich bei dem Acrylat-Monomer um mindestens ein auf Methacrylat basierendes Monomer, das aus Ethylmethacrylat, n-Butylmethacrylat, i-Butylmethacrylat, t-Butylmethacrylat, Laurylmethacrylat und 2-Ethylhexylmethacrylat ausgewählt ist, oder mindestens eines, das aus Methylacrylat, Ethylacrylat, n-Butylacrylat, t-Butylacrylat und 2-Ethylhexylacrylat ausgewählt ist, handelt.

7. Schlagzähe Methylmethacrylatharzzusammensetzung mit hervorragender Kratzfestigkeit nach Anspruch 5, wobei die auf PMMA basierende Harzzusammensetzung ferner mindestens eines aus der Gruppe bestehend aus einem einem aktiven Mittel, einem Stabilisator, einem wärmebeständigen Mittel, einem Antioxidans, einem UV-Stabilisator, einem optischen Aufheller, einem Flammschutzmittel, einem Farbstoff, einem anorganischen Additiv und einem Pigment umfasst.

8. Gehäuse, hergestellt durch Extrusion oder Spritzguss unter Verwendung der schlagzähen Methylmethacrylatharzzusammensetzung mit hervorragender Kratzfestigkeit, die aus einem der Ansprüche 1 bis 7 ausgewählt ist.

## Revendications

1. Composition de résine de méthacrylate de méthyle résistante aux chocs ayant une excellente résistance aux rayures, comprenant une résine à base de PMMA contenant 10 à 50 % en poids d'un modifiant choc et 0,5 à 5 parties en poids d'un composé de siloxane ayant une structure de Formule 1 ci-dessous pour 100 parties en poids de la résine à base de PMMA. 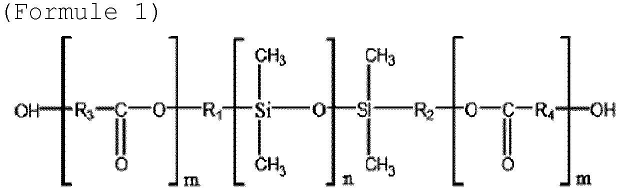 (dans la Formule 1, R₁, R₂, R₃ et R₄ représentent indépendamment un alkylène ayant 1 à 5 atomes de carbone ; et m et n représentent indépendamment un entier valant 1 ou plus.)

2. Composition de résine de méthacrylate de méthyle résistante aux chocs ayant une excellente résistance aux rayures de la revendication 1, dans laquelle, dans la Formule 1, R₁ et R₂ représentent indépendamment - (CH₂)₃- ; R₃ et R₄ représentent indépendamment -(CH₂)₅- ; et m et n représentent indépendamment un entier valant 1 ou plus, satisfaisant m:n = 18:30.

3. Composition de résine de méthacrylate de méthyle résistante aux chocs ayant une excellente résistance aux rayures de la revendication 1, dans laquelle le modifiant choc est polymérisé par au moins un comonomère choisi parmi le butadiène, le méthacrylate de méthyle, l'acrylate de méthyle, le (méth)acrylate d'éthyle, le (méth)acrylate de butyle, et le styrène, et au moins un agent de réticulation choisi parmi le divinylbenzène, le diméthacrylate d'éthylène glycol, et le diméthacrylate de diéthylène glycol.

4. Composition de résine de méthacrylate de méthyle résistante aux chocs ayant une excellente résistance aux rayures de la revendication 1, dans laquelle la résine à base de PMMA est un homopolymère de monomères de méthacrylate de méthyle ou un copolymère d'un monomère de méthacrylate de méthyle et d'un monomère d'acrylate.

5. Composition de résine de méthacrylate de méthyle résistante aux chocs ayant une excellente résistance aux rayures de la revendication 4, dans laquelle le copolymère du monomère de méthacrylate de méthyle et du monomère d'acrylate contient 80 à 90 % en poids du monomère de méthacrylate de méthyle et 10 à 20 % en poids du monomère d'acrylate.

6. Composition de résine de méthacrylate de méthyle résistante aux chocs ayant une excellente résistance aux rayures de la revendication 5, dans laquelle le monomère d'acrylate est au moins un monomère à base de méthacrylate choisi parmi le méthacrylate d'éthyle, le méthacrylate de n-butyle, le méthacrylate d'isobutyle, le méthacrylate de t-butyle, le méthacrylate de lauryle, et le méthacrylate de 2-éthylhexyle, ou au moins un monomère choisi parmi l'acrylate de méthyle, l'acrylate d'éthyle, l'acrylate de n-butyle, l'acrylate de t-butyle, et l'acrylate de 2-éthylhexyle.

7. Composition de résine de méthacrylate de méthyle résistante aux chocs ayant une excellente résistance aux rayures de la revendication 5, la composition de résine à base de PMMA comportant en outre au moins un élément choisi dans le groupe constitué par un agent actif, un stabilisant, un agent résistant à la chaleur, un antioxydant, un stabilisant anti-UV, un agent de blanchiment fluorescent, un ignifugeant, un colorant, un additif inorganique, et un pigment.

8. Boîtier fabriqué par extrusion ou moulage par injection au moyen de la composition de résine de méthacrylate de méthyle résistante aux chocs ayant une excellente résistance aux rayures sélectionnée à partir de l'une quelconque des revendications 1 à 7.
